# EUROPEAN PATENT SPECIFICATION

(11) **EP 0 971 525 B1**
(45) Date of publication and mention of the grant of the patent: **11.04.2007**
(21) Application number: 98112510.7
(22) Date of filing: 06.07.1998
(51) Int. Cl.: H04M 11/06, H04Q 7/32

(54) **Multi-call communication system and adapter for multi-call communication**
Mehrrufkommunikationssystem und Mehrrufkommunikationsszwischenvorrichtung
Système de communication multi-appel et adaptateur pour communication multi-appel

(43) Date of publication of application: 12.01.2000
(73) Proprietor: MATSUSHITA ELECTRIC INDUSTRIAL CO., LTD., Kadoma-shi, Osaka 571-0050 (JP)
(72) Inventor: Minamida, Noriaki, Room 201, Green Sakae, Yokohama-shi, Kanagawa 222 (JP)
(74) Representative: Grünecker, Kinkeldey, Stockmair & Schwanhäusser Anwaltssozietät

(56) References cited:
- EP-A- 0 750 439

## Description

### BACKGROUND OF THE INVENTION

### Field of the Invention

The present invention relates to multi-call communication systems that allow multi-call communications between a variety of terminals such as speech terminals, image terminals, text terminals connected to mobile stations or ISDN terminals and other terminals by means of base station control apparatuses linked with the mobile stations.

### Description of the Related Art

Data communication systems making use of mobile radio communication technologies are well known and these are described in Unexamined Japanese Patent Publication Nos.5-153041 and 8-237718, etc.

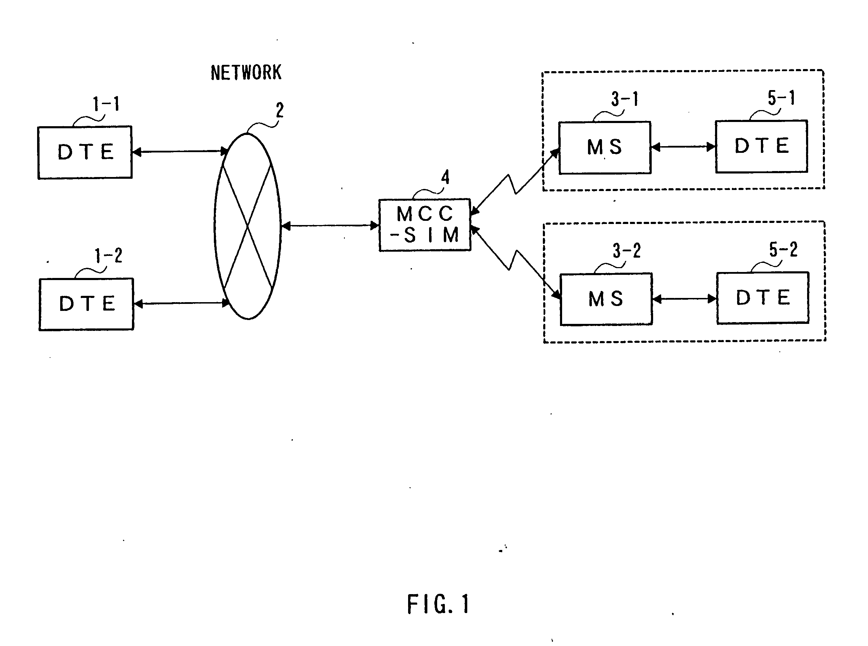

FIG.1 shows an outline of a data communication system using mobile radio communication technologies. In this data communication system, a plurality of terminals 1-1 and 1-2 are linked with network 2 made up of a public switched network, etc. Mobile stations (MS) 3-1 and 3-2 are linked with network 2 via base station control apparatus (MCC-SIM) 4. The mobile stations (MS) and the base station control apparatus are linked by air, through mobile radio communications. Various types of terminals 5-1 and 5-2 such as speech terminals, image terminals, text terminals or ISDN terminals are directly connected with mobile stations (MS) 3-1 and 3-2, and these terminals 5-1 and 5-2 which have no radio communication function communicate with terminals 1-1 and 1-2 on the opposite side of network 2.

The operation of the data communication system configured as above is explained below.

Suppose DTE 5-2 which is a terminal connected to the mobile station sends a request for data communication to DTE 1-2 which is another terminal linked with Network 2. In this case, a connection request is issued from MS 3-2 to which DTE 5-2 is directly connected to MCC-SIM 4. If MCC-SIM 4 is successful in confirming a vacancy of DTE 1-2 which is linked with Network 2, MCC-SIM 4 transmits service acceptance information to MS 3-2. After a while, data communication is started between DTE 5-2 and DTE 1-2.

While data communication is in progress between DTE 5-2 and DTE 1-2 as shown above, suppose that the other terminal DTE 5-1 which is directly connected to mobile station 3-1 sends a request for data communication to DTE 1-1 which is the other terminal linked with network 2. In this case, a connection request is issued from MS3-1 to which DTE 5-1 is directly connected to MCC-SIM 4. If MCC-SIM 4 is successful in confirming a vacancy of terminal 1-1 linked with network 2, it sends service acceptance information to MS 3-1. After a while, data communication is started between DTE 5-1 and DTE 1-1.

As seen above, while data communication between DTE 5-2 and DTE 1-2 is in progress, data communication between DTE 5-1 and DTE 1-1 can be carried out additionally. Thus, it is possible to implement multiple data communications by way of mobile stations and base station control apparatuses.

However, in the case of the data communication system using the mobile radio communications described above has DTE 5-1 or DTE 5-2 and MS 3-1 or MS 3-2 directly connected, and thus it requires a number of mobile stations (MS) by the number of data communications to implement multiple data communications via the base station control apparatus (MCC-SIM).

Document EP 0 750 439 A1 aims at reducing invalid traffics when a paging is to be performed in a mobile data communication system including a communication terminal connected with data terminals. The communication terminal is provided with a notice means for recognizing a state of use of itself and states of use of the data terminals and notifying a result of the recognition to the network side. The network system is provided with a storage means for registering a communication terminal in which the communication terminal and at least one of the data terminals became usable and deleting the registration of the communication terminal or a communication terminal in which the data terminals became unusable, in accordance with the result of the notice.

### SUMMARY OF THE INVENTION

The present invention is intended to solve conventional problems as described above and its objective is to provide a multi-call communication system that will allows multiple data communications (including speech communications), that is, multi-call communications via one mobile station.

### BRIEF DESCRIPTION OF THE DRAWINGS

FIG.1 shows the configuration of a conventional data communication system using air like a radio;
FIG.2 shows the configuration of a multi-call communication system of an embodiment for the present invention;
FIG.3 is a functional section diagram of part of a terminal interface adapter;
FIG.4 is a configuration diagram of a terminal control table;
FIG.5 is a configuration diagram of a call number address control table.
FIG.6 is a functional section diagram of part of a mobile station;
FIG.7 shows an example of exchange of signals and data between base station control apparatus, mobile station, terminal interface adapter and various terminals;
FIG.8 is a section diagram showing an outline of the hardware configuration of the mobile station and terminal interface adapter; and
FIG.9 is a section diagram showing an outline of the interface of the terminal interface adapter (ADP).

### DESCRIPTION OF THE PREFERRED EMBODIMENT

With reference now to the attached drawings, an embodiment of the present invention is explained below.

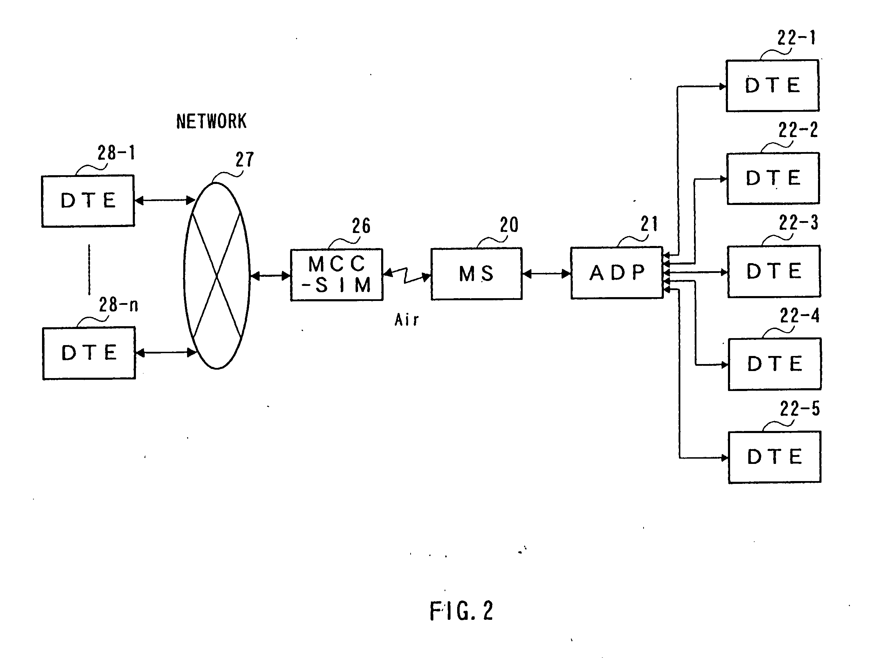

FIG.2 shows configuration of a multi-call communication system related to the embodiment of the present invention. This multi-call communication system has a configuration so that multiple terminals (DTE) 22-1 to 22-5 which are directly connected to mobile station(MS) 20 via terminal interface adapter (ADP) 21 can communicate with other terminals (DTE) 28-1 to 28-n which are connected with network 27 to which MS 20 can be connected via base station control apparatus (MCC-SIM) 26. ADP 21 is incorporated in MS 20 or externally attached thereto. MS 20 is connected to MCC-SIM 26 by air, for example, by radio. Furthermore, a plurality of DTE 22-1 to 22-5 are connected with ADP 21 via various types of terminal interfaces such as infrared ray (Ir), RS-232C, ISDN and handset, etc. Between MCC-SIM 26 and MS 20, and MS 20 and ADP 21 are designed to be linked through time division multiplex communication paths respectively. The line is set with the multiplexed positions of time division communication paths to be used for connections assigned as physical addresses.

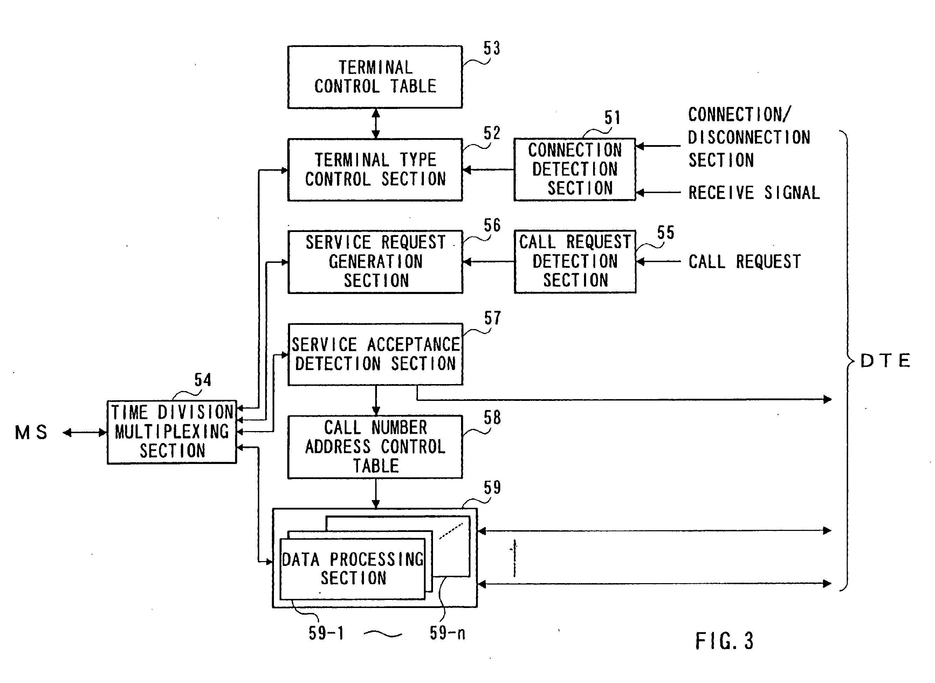

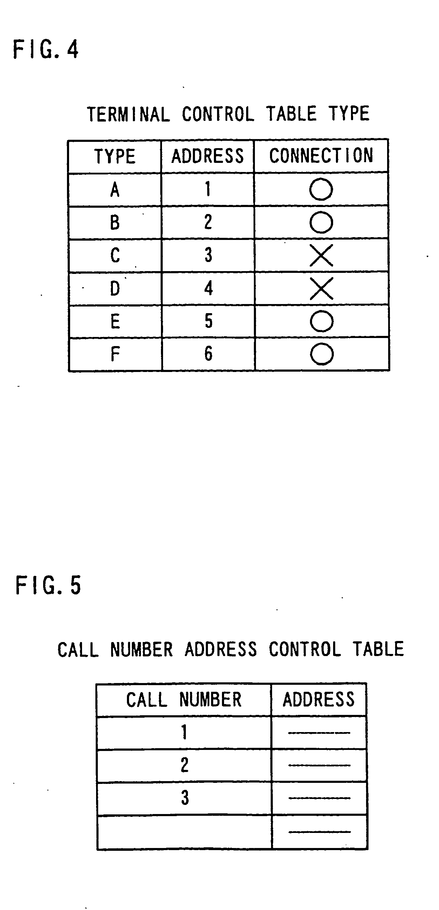

FIG.3 shows a functional section of part of ADP 21. A connection/disconnection signal which indicates whether DTE 22-1 to 22-5 are connected to the terminals on ADP 21 or not and a receive signal from the IrDA DTE are input to connection detection section 51. Connection detection section 51 outputs the data of the terminals connected with ADP 21 with communication enabled to terminal type control section 52. Terminal type control section 52 controls terminal types that can currently be handled based on the content of terminal control table 53. FIG.4 shows the data structure of terminal control table 53. Terminal control table 53 registers terminal types (A to F) structurally compatible with ADP 21, physical addresses or logical addresses assigned to each terminal type and connection data that indicates whether those terminals are currently connected with communication enabled or not.

The connection data is updated according to the connection/disconnection signal and receive signal input from connection detection section 51 to terminal type control section 52. Terminal type control section 52 extracts information on the type of each DTE and number of connections from terminal control table 53 and notifies it to MS 20. Upon powering-on of ADP 21, when MS 20 sends a notification request, if a new DTE is connected with ADP 21, terminal type control section 52 notifies it. Notification from ADP 21 to MS 20 is performed with the timing assigned by time division multiplexing section 54.

This notification allows MS 20 to control the type of terminal that can respond to service requests from MCC-SIM 26 and the total number of multi-calls.

When a call request is issued from a DTE connected to ADP 21 to another DTE connected to network 27, the call request is detected by call request detection section 55.

Call request detection section 55 receives the call request issued from the DTE connected to ADP 21 and hands it over to service request generation section 56. Service request generation section 56 transmits the service request with the type of terminal specified to MS 20.

ADP 21 detects the response of MS 20 to the service request above by service acceptance detection section 57. If the response to the service request above is "service acceptance" which indicates acceptance of the service request, service acceptance detection section 57 notifies the DTE which requested the call that the call request has been accepted and at the same time adds a call number to call number address control table 58.

FIG.5 shows the data structure of call number address control table 58. Call number address control table 58 includes addresses assigned to DTEs whose service request has been accepted and call numbers assigned to communication of DTEs whose service request has been accepted.

Now, addresses are explained below. There are two kinds of address; logical address and physical address. Physical address numbers indicate multiplexed positions on a multiplexed communication path for setting lines, while logical addresses are preset according to the type of terminal. For example, in the case of a speech terminal, its logical address is "1" and in the case of an image terminal, its logical address is "2" and so on.

When it receives a notice of service acceptance, the DTE which requested the call starts data communication with the DTE of the far-end station of communication. ADP 21 is provided with communication control section 59 which comprises data processing sections 59-1 to 59-n corresponding to various terminals. In ADP 21, the data processing section which corresponds to the DTE in communication connected to ADP 21 processes data sent from the DTE and the processed data is output from time division multiplexing section 54 to MS 20 at the timing corresponding to the address assigned to the DTE. On the other hand, the data transmitted from the MS 20 side to the DTE of on the ADP side is collected by time division multiplexing section 54 at the timing corresponding to the address assigned to the DTE and handed over to the data processing section. Then, it is output from the corresponding terminal to the DTE.

Furthermore, as described later, if MS 20 accepts a service request issued from DTE 28-1 to 28-n on the network side, the service acceptance is notified to ADP 21. In ADP 21, the service acceptance is detected by service acceptance detection section 57. When accepting a service request issued from DTE 28-1 to 28-n, service acceptance detection section 57 also notifies the DTE (22-1 to 22-5) according to the service type in the same way as above and at the same time it registers the call number and DTE address in call number address table 58. Once the service request is accepted, the data sent from a DTE on the ADP side is processed by the data processing section corresponding to the relevant DTE, time division multiplexed at the timing of the address corresponding to the call number and sent to the MS side. The data that MS 20 received from the network side is separated from the multiplexed data in time division multiplexing section 54 and handed over to the corresponding data processing section. The data is sent to the DTE connected via this data processing section.

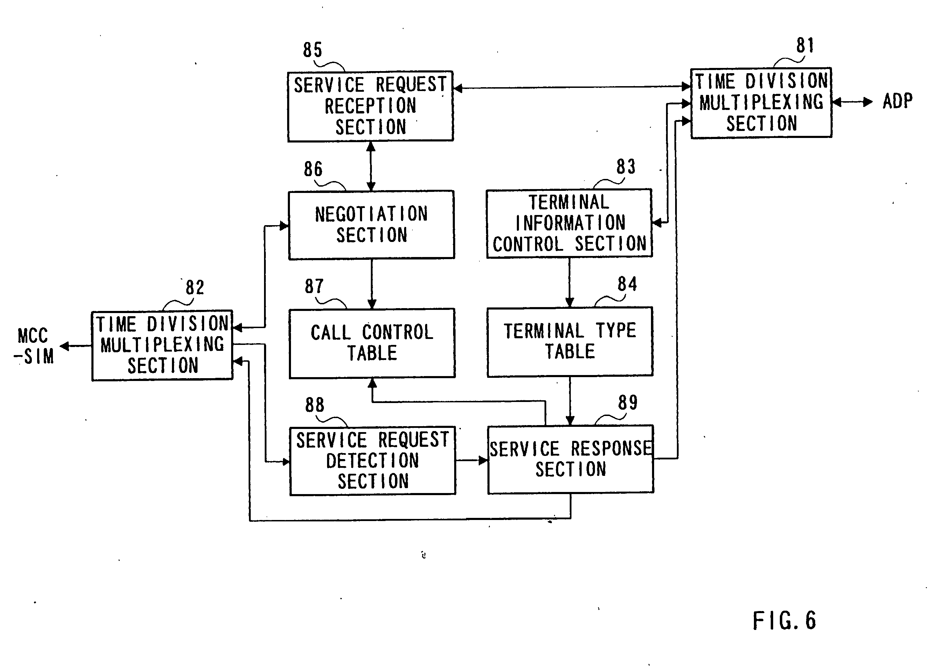

FIG.6 shows a functional section of MS 20. MS 20 exchanges the data time-division-multiplexed by time division multiplexing section 81 with ADP 21, while MS 20 exchanges the data time-division-multiplexed by time division multiplexing section 82 with MCC-SIM 26.

As shown above, the terminal information received from ADP 21 is stored by terminal information control section 83 in terminal type table 84. Terminal type table 84 registers terminal types with communication capability connected to ADP 21. There are two cases; when terminal information control section 83 of MS 20 requests ADP 21 for transmission of terminal types and when terminal types are automatically sent from ADP 21.

Service request reception section 85 detects a service request sent from ADP 21 and notifies it to negotiation section 86. When it receives the service request detected, negotiation section 86 negotiates with MCC-SIM 26 to see whether the service is acceptable or not and returns the negotiation result to service request reception section 85. When the negotiation is concluded, a new call number and service type are registered in call control table 87.

Service requests may also be output from DTE 28-1 and 28-2 on the opposite side of network 27 to a terminal connected to ADP 21. In this case, service request detection section 88 of MS 20 detects the service request from DTE 28-1 and 28-2 and hands it over to service response section 89. Service response section 89 judges whether the terminal type conformable with the required service type is connected to ADP 21 or not. Since the terminal type connected to ADP 21 is stored in terminal type table 84, service response section 89 can judge whether the service request is acceptable or not by checking the content of terminal type table 84. If the judgment result shows that the service is acceptable, service response section 89 registers the call number and service type in call control table 87 and at the same time it sends the call number and terminal type to ADP 21 as information incidental to the service acceptance. Service response section 89 returns the service acceptance to MCC-SIM 26 in order to also return the service request result to the DTE that requested the service.

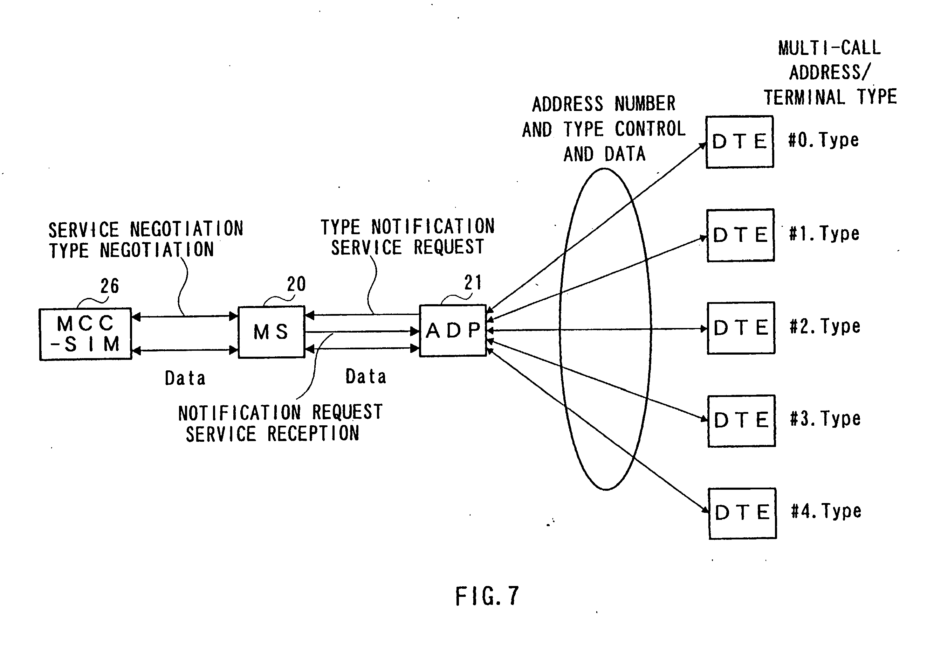

With reference now to FIG.7, the multi-call communication is explained more specifically below.

Multi-call communications are based on the premise that the system has been constructed so as to allow single call communications first of all. Suppose, for example, single-call communication has been started from DTE 22-2 connected via an RS232C interface to a DTE linked with network 27, for example DTE 28-1.

In this case, when data from DTE 22-2 is given to ADP 21, ADP 21 issues a service request to MS 20 according to the type of DTE 22-2 (for example, DTE of a terminal type connectable by an RS232C interface).

According to the type of DTE 22-2, MS 20 negotiates with MCC-SIM 26, checks whether the condition is met or not, and if the condition is met, MS 20 will proceed with acceptance of the service. Then, the service acceptance information is sent from MS 20 to ADP 21. At this time, MCC-SIM 26 and MS 20 control the type of service of this first call, that is, the terminal type to be used.

Or, instead of single-call communication from DTE 22 connected to ADP 21 as shown above, if a service request from a DTE linked with network 27, for example DTE 28-1, is issued from network 27 to MCC-SIM 26 and sent from MCC-SIM 26 to MS 20, MS 20 judges the type of service at that time, that is, the terminal type to be used. If none in DTE 22 connected to ADP 21 is conformable with the type of service, that is, the terminal type to be used, it acts to reject the service and if some are conformable with the type of service, that is, the terminal type to be used, MS 20 sends ADP 21 the service acceptance information. At this time, MCC-SIM 26 and MS 20 control the type of service of the first call, that is, the terminal type to be used. On the other hand, ADP 21 controls the address number of DTE 22 to which this first call is assigned.

Then, while single-call communication as shown above is in progress, suppose data is given to ADP 21 from a DTE which is not carrying out communications, for example, DTE 22-1. ADP 21 sends MS 20 a multi-call communication service request which is the second call according to the type of DTE 22-1 (for example, DTE with a terminal type connectable by an infrared interface).

According to the type (terminal type) of DTE 22-1, MS 20 negotiates with MCC-SIM 26, checks whether the condition is met or not, and if the condition is met it will proceed with acceptance of the multi-call service. Then, the service acceptance information is sent from MS 20 to ADP 21. At this time, MCC-SIM 26 and MS 20 control the type of service of this second call, that is, the terminal type to be used. On the other hand, ADP 21 controls the address number of DTE 22 to which the second call is assigned.

Then, while single-call communication as shown above is in progress, suppose a service request from a terminal (DTE) connected to network 2, for example terminal 28-n is issued from network 27 to MCC-SIM 26 and MCC-SIM 26 sends MS 20 a multi-call service request which is the second call. MS 20 judges the type of service at that time, that is, the terminal type to be used, and if none in DTE 22 connected to ADP 21 is conformable with the type of service, that is, the terminal type to be used, it will act to reject the service and if some are conformable with the type of service, that is, the terminal type to be used, MS 20 sends ADP 21 the service acceptance information. At this time, MCC-SIM 26 and MS 20 control the type of service of this second call, that is, the terminal type to be used. On the other hand, ADP 21 controls the address number of DTE 22 to which the second call is assigned.

Then, if a third, fourth, or fifth multi-call communication service request is sent from DTE 22 which is not carrying out communication or a service request from another terminal (DTE) linked with network 27 is issued from network 27 to MCC-SIM 26 and then sent from MCC-SIM 26 to MS 20, it is possible to implement a third, fourth or fifth multi-call communication service by repeating the operation described above.

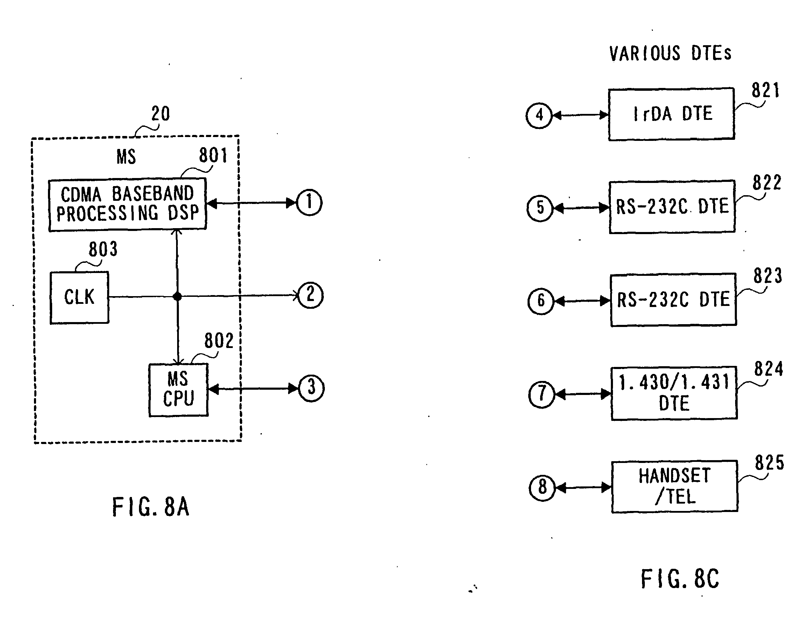

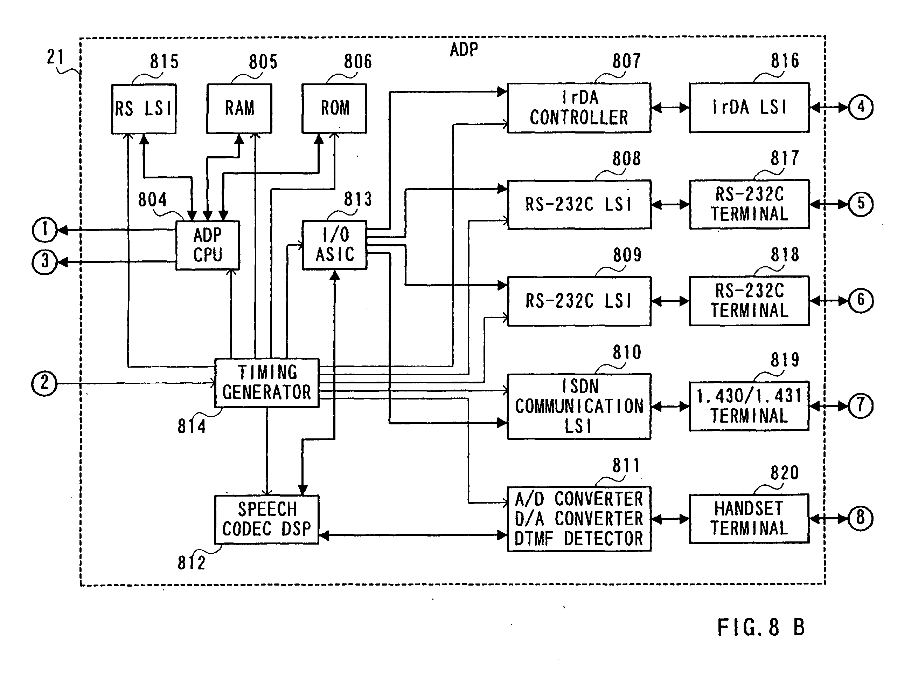

FIG.8 shows the circuit configuration of ADP 21. ADP 21 comprises ADP CPU 804, storage sections such as RAM 805 and ROM 806, IrDA controller 807 that controls transmission/reception of signals to/from terminal 821 connected by an infrared interface, RS-232C LSIs 808 and 809 that control transmission/reception of signals to/from terminals 822 and 823 connected via an RS232C interface, and ISDN communication LSI 810 that controls transmission/reception of signals to/from terminal 824 connected via an ISDN interface (I.430/I.431). IrDA controller 807, RS-232C LSIs 808 and 809, and ISDN communication LSI 810 make up data processing sections 59-1 to 59-n. Furthermore, other functional sections in FIG.3 are implemented by ADP CPU 804 executing a program stored in ROM 806. Terminals DTE 821 to DTE 824 and handset/TEL 825 in FIG.8 correspond to DTE 22-1 to DTE 22-5 in FIG.2.

In addition, ADP 21 is also provided with an A/D converter, D/A converter and DTMF detector 811 that control transmission/reception of signals, speech CODEC DSP 812 related to the A/D converter, D/A converter and DTMF detector 811, I/O-ASIC 813 that performs unified control over IrDA controller 807, RS-232C LSIs 808 and 809, ISDN communication LSI 810 and speech CODEC DSP 812 as I/O control for ADP CPU 804, RS LSI 815 that carries out error checks, and timing generator 814 that receives clock supplies from CLK generator 803 of mobile station 20 and generates various timings.

MS 20 is provided with DSP (Digital Signal Processor) 801 dedicated to processing of baseband signals, CPU 802 dedicated to control of MS itself, and CLK 803 that delivers various clocks.

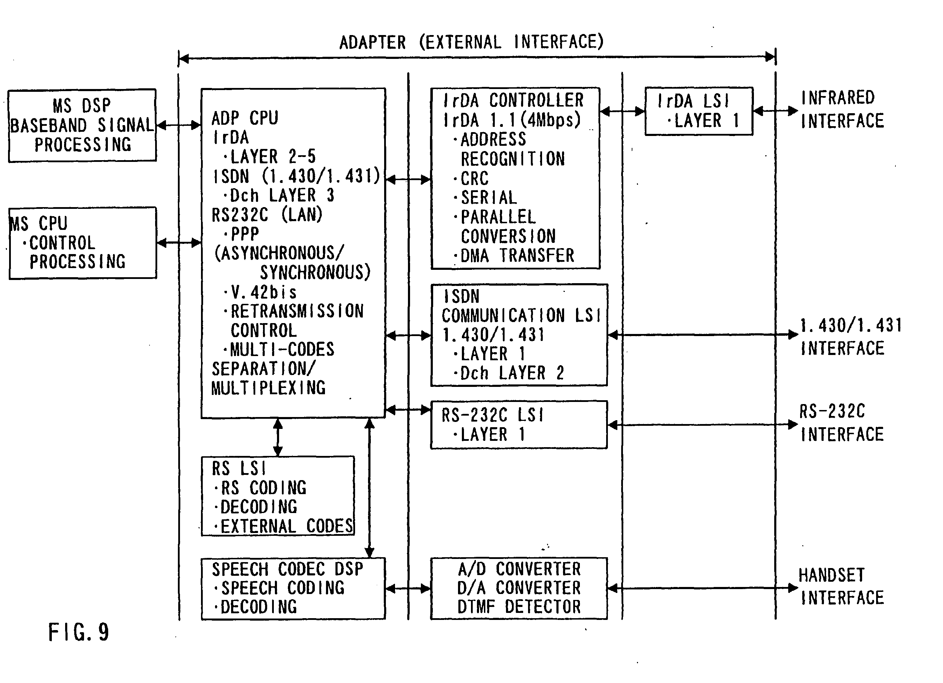

FIG.9 shows an example of the configuration of ADP 21 and control carried out by LSIs for respective interfaces. With ADP CPU 804, ADP 21 carries out control over layers 2 to 5 for the IrDA, Dch layer 3 for ISDN (I.430) and PPP, V.42 bis, retransmission control, multi-code separation/multiplexing, etc. for RS-232C (LAN). Furthermore, with the IrDA controller, ADP 21 carries out address routing, serial/parallel conversion, DMA transfer, and DRC coding/decoding, etc. With the RS LSI provided for error checking, ADP 21 also carries out control such as RS coding/decoding and coding/decoding of external codes.

As shown above, providing ADP 21 between DTE 22 and MS 20 and connecting MCC-SIM 26 and MS 20, and MS and ADP 21 through time division communication paths, making it possible to implement multiple data communications (including speech communications), that is, multi-call communications via one MS, can achieve excellent effects such as assuring an efficient use of mobile stations (MS) when carrying out multiple data communications and providing a data communication system with excellent cost performance.

## Claims

1. A mobile station (20) which is connected with a plurality of terminals (22) via an adapter (21) and which performs communications via a base station control apparatus (26) connected to a network (27),
**characterized in that**
said mobile station (20) comprises:
terminal data controlling means (83) for controlling terminal data which indicates the types of terminals (22) connected to said adapter (21);
service request receiving means (88) for receiving a service request from the network (27) during communication with said base station control apparatus (26);
searching means (89) for searching the terminal type that can accept the service request from said base station control apparatus (26) from said terminal data;
service acceptance data returning means (89) for returning service acceptance data to said base station control apparatus (26) when acceptable terminal types have been detected from said terminal data;
call number assigning and controlling means (89) for assigning a call number to the communication corresponding to the service request for which service acceptance data is returned to said base station control apparatus (26) and controlling them.

2. The mobile station (20) according to claim 1, comprising said adapter (21), wherein said adapter has interfaces with said plurality of terminals (22) and said mobile station (20).

3. The mobile station according to claim 1 or 2, further comprising:
service request accepting means (85) for accepting a service request to be input from one of said terminals (22) via said adapter (21);
negotiation means (86) for negotiating with said base station control apparatus (26) by indicating the terminal type of the source of the accepted service request and if the negotiations are completed, returning the service acceptance data to the terminal (22) via said adapter (21);
call number assigning and controlling means (86) for assigning a call number to the communication corresponding to the service request for which the service acceptance data is returned to said terminal (22) and controlling it.

4. The mobile station (20) according to any of claims 1 - 3, wherein: said adapter (21) comprises:
call request detecting means (55) for detecting a call request from one of said terminals (22) connected to said adapter (21);
service request issuing means (52) for issuing a service request to said mobile station (20) if said call request is detected;
call number and terminal address controlling means (57) for detecting service acceptance data input from said mobile station (20) and controlling call numbers and terminal addresses.

5. The mobile station (20) according to any of claims 1 - 4, wherein: said adapter (21) comprises notification means (52) for notifying terminal data including the terminal types and number of terminals connected to said adapter (21) to said mobile station (20).

6. The mobile station (20) according to any of claims 1 - 5, wherein: said adapter (21) notifies said terminal data to said mobile station (20) when the power is turned on, when a notification request is issued from said mobile station (20) or when a new terminal (22) is connected to said adapter (21).

7. The mobile station (20) according to any of claims 1 - 6, wherein data is transmitted/received on a time-division basis for each of said terminals (22) when carrying out multi-call communications through said terminals (22) connected to said adapter (21).

8. The mobile station (20) according to any of claims 1 - 7, wherein: said adapter (21) can terminal interfaces such as an infrared interface, ISDN interface, RS-232C interface and handset interface and is provided with at least two kinds of said terminal interfaces.

9. The mobile station (20) according to any of claims 1 - 8, wherein:
said terminal data controlling means (83) collects said terminal data from said adapter (21).

10. An adapter (21) attached to a mobile station (20) which performs communications via a base station control apparatus (26) connected to a network (27), **characterized in that** said adapter comprises:
a plurality of connectors (816 to 820) connected with a plurality of terminals (22);
call request detecting means (55) for detecting a call request from said terminals (22);
service request issuing means (52) for issuing a service request to said mobile station (20) when said call request is detected;
call number and terminal address controlling means (57) for detecting service acceptance data input from said mobile station (20) and controlling cal numbers and terminal addresses.

11. A communication system comprising a mobile station (20) which is connected with a plurality of terminals (22) via an adapter (21) and which performs communications via a base station control apparatus (26) connected to a network (27), **characterized in that**: wherein
said adapter (21) notifies terminal data which indicates the types of terminals (22) to said mobile station (20);
said mobile station (20) controls the types of terminals (22) which can meet service requests from said base station control apparatus (26) and total number of multi-calls and returns a notice of service acceptance to said base station control apparatus (26) if the service requests from the base station control apparatus (26) can be met.

## Patentansprüche

1. Mobilstation (20), die mit einer Vielzahl von Endgeräten (22) über einen Adapter (21) verbunden ist und Kommunikationsvorgänge über eine Basisstations-Steuervorrichtung (26) durchführt, die mit einem Netzwerk (27) verbunden ist,
**dadurch gekennzeichnet, dass**
die Mobilstation (20) umfasst:
eine Endgerätdaten-Steuereinrichtung (83) zum Steuern von Endgerätdaten, die die Typen von Endgeräten (22) anzeigen, die mit dem Adapter (21) verbunden sind;
eine Dienstanforderungs-Empfangseinrichtung (88) zum Empfangen einer Dienstanforderung von dem Netzwerk (27) bei Kommunikation mit der Basisstations-Steuervorrichtung (26);
eine Sucheinrichtung (89) zum Suchen des Endgerättyps, der die Dienstanforderung von der Basisstations-Steuervorrichtung (26) annehmen kann, aus den Endgerätdaten;
eine Dienstannahmedaten-Rückführeinrichtung (89) zum Zurückführen von Dienstannahmedaten zu der Basisstations-Steuervorrichtung (26), wenn annehmbare Endgerättypen aus den Endgerätdaten erfasst worden sind;
eine Rufnummer-Zuweisungs-und-Steuer-Einrichtung (89) zum Zuweisen einer Rufnummer zu dem Kommunikationsvorgang entsprechend der Dienstanforderung, für die Dienstannahmedaten zu der Basisstations-Steuervorrichtung (26) zurückgeführt werden, und zum Steuern derselben.

2. Mobilstation (20) nach Anspruch 1, die den Adapter (21) umfasst, wobei der Adapter Schnittstellen mit der Vielzahl von Endgeräten (22) und der Mobilstation (20) hat.

3. Mobilstation nach Anspruch 1 oder 2, die des Weiteren umfasst:
eine Dienstanforderungs-Annahmeeinrichtung (85) zum Annehmen einer Dienstanforderung, die von einem der Endgeräte (22) über den Adapter (21) einzugeben ist;
eine Aushandlungseinrichtung (86), die mit der Basisstations-Steuervorrichtung (26) durch Anzeigen des Endgerättyps der Quelle der angenommenen Dienstanforderung aushandelt, und, wenn das Aushandeln abgeschlossen ist, die Dienstannahmedaten zu dem Endgerät (22) über den Adapter (21) zurückführt;
eine Rufnummer-Zuweisungs-und-Steuer-Einrichtung (86) zum Zuweisen einer Rufnummer zu dem Kommunikationsvorgang entsprechend der Dienstanforderung, für die die Dienstannahmedaten zu dem Endgerät (22) zurückgeführt werden, und sie steuert.

4. Mobilstation (20) nach einem der Ansprüche 1 - 3, wobei der Adapter (21) umfasst:
eine Verbindungsanforderungs-Erfassungseinrichtung (55) zum Erfassen einer Verbindungsanforderung von einem der Endgeräte (22), das mit dem Adapter (21) verbunden ist;
eine Dienstanforderungs-Ausgabeeinrichtung (52) zum Ausgeben einer Dienstanforderung an die Mobilstation (20), wenn die Verbindungsanforderung erfasst wird; und
eine Rufnummer-und-Endgerätadressen-Steuereinrichtung (57), die von der Mobilstation (20) eingegebene Dienstannahmedaten erfasst und Rufnummern sowie Endgerätadressen steuert.

5. Mobilstation (20) nach einem der Ansprüche 1 - 4, wobei der Adapter (21) eine Mitteilungseinrichtung (52) umfasst, die der Mobilstation (20) Endgerätdaten einschließlich der Endgerättypen und der Anzahl von Endgeräten, die mit dem Adapter (21) verbunden sind, mitteilt.

6. Mobilstation (20) nach einem der Ansprüche 1 - 5, wobei der Adapter (21) der Mobilstation (20) die Endgerätdaten mitteilt, wenn der Strom angeschaltet wird, wenn eine Mitteilungsanforderung von der Mobilstation (20) ausgegeben wird oder wenn ein neues Endgerät (22) mit dem Adapter (21) verbunden wird.

7. Mobilstation (20) nach einem der Ansprüche 1 - 6, wobei Daten auf Zeitteilbasis für jedes der Endgeräte (22) gesendet/empfangen werden, wenn Mehrfachverbindungs-Kommunikationsvorgänge über die Endgeräte (22) ausgeführt werden, die mit dem Adapter (21) verbunden sind.

8. Mobilstation (20) nach einem der Ansprüche 1 - 7, wobei der Adapter (21) mit Endgerätschnittstellen, wie beispielsweise einer Infrarot-Schnittstelle, einer ISDN-Schnittstelle, einer RS-232C-Schnittstelle und einer Handapparat-Schnittstelle arbeiten kann und mit wenigstens zwei Arten der Endgerätschnittstellen versehen ist.

9. Mobilstation (20) nach einem der Ansprüche 1 - 8, wobei;:
die Endgerätdaten-Steuereinrichtung (83) die Endgerätdaten von dem Adapter (21) erfasst.

10. Adapter (21), der an einer Mobilstation (20) angebracht ist, die Kommunikationsvorgänge über eine Basisstations-Steuervorrichtung (26) durchführt, die mit einem Netzwerk (27) verbunden ist, **dadurch gekennzeichnet, dass** der Adapter umfasst:
eine Vielzahl von Verbindern (816 bis 820), die mit einer Vielzahl von Endgeräten (22) verbunden sind;
eine Verbindungsanforderungs-Erfassungseinrichtung (55) zum Erfassen einer Verbindungsanforderung von den Endgeräten (22);
eine Dienstanforderungs-Ausgabeeinrichtung (52) zum Ausgeben einer Dienstanforderung an die Mobilstation (20), wenn die Verbindungsanforderung erfasst wird;
eine Rufnummer-und-Endgerätadressen-Steuereinrichtung (57), die Dienstannahmedaten erfasst, die von der Mobilstation (20) eingegeben werden, und Rufnummern sowie Endgerätadressen steuert.

11. Kommunikationssystem, das eine Mobilstation (20) umfasst, die über einen Adapter (21) mit einer Vielzahl von Endgeräten (22) verbunden ist und Kommunikationsvorgänge über eine Basisstations-Steuervorrichtung (26) durchführt, die mit einem Netzwerk (27) verbunden ist, **dadurch gekennzeichnet, dass**
der Adapter (21) der Mobilstation (20) Endgerätdaten mitteilt, die die Typen von Endgeräten (22) anzeigen;
die Mobilstation (20) die Typen von Endgeräten, die Dienstanforderungen von der Basisstations-Steuervorrichtung (26) erfüllen können, und die Gesamtzahl von Mehrfachverbindungen steuert und eine Mitteilung über Dienstannahme an die Basisstations-Steuervorrichtung (26) zurückführt, wenn die Dienstanforderungen von der Basisstations-Steuervorrichtung (26) erfüllt werden können.

## Revendications

1. Station mobile (20) qui est connectée à une pluralité de terminaux (22) via un adaptateur (21) et qui réalise des communications via un appareil (26) de commande de station de base connecté à un réseau (27),
**caractérisé en ce que**
ladite station mobile (20) comprend :
un moyen (83) de commande de données de terminal pour commander des données de terminal qui indiquent les types de terminaux (22) connectés audit adaptateur (21) ;
un moyen (88) de réception de demande de service pour recevoir une demande de service du réseau (27) pendant la communication avec ledit appareil (26) de commande de station de base ;
un moyen (89) de recherche pour rechercher le type de terminal qui peut accepter la demande de service dudit appareil (26) de commande de station de base desdites données de terminal ;
un moyen (89) de renvoi de données d'acceptation de service pour renvoyer des données d'acceptation de service audit appareil (26) de commande de station de base lorsque des types de terminaux acceptables ont été détectés à partir desdites données de terminal ;
un moyen (89) d'affectation et de commande de numéro d'appel pour affecter un numéro d'appel à la communication correspondant à la demande de service pour laquelle des données d'acceptation de service sont renvoyées audit appareil (26) de commande de station de base et pour les commander.

2. Station mobile (20) selon la revendication 1, comprenant ledit adaptateur (21), dans lequel ledit adaptateur a des interfaces avec ladite pluralité de terminaux (22) et ladite station mobile (20).

3. Station mobile selon la revendication 1 ou 2, comprenant en outre :
un moyen (85) d'acceptation de demande de service pour accepter une demande de service devant être entrée à partir d'un desdits terminaux (22) via ledit adaptateur (21) ;
un moyen (86) de négociation pour négocier avec ledit appareil (26) de commande de station de base en indiquant le type de terminal de la source de la demande de service acceptée et si les négociations sont terminées, pour renvoyer les données d'acceptation de service au terminal (22) via ledit adaptateur (21) ;
un moyen (86) d'affectation et de commande de numéro d'appel pour affecter un numéro d'appel à la communication correspondant à la demande de service pour laquelle les données d'acceptation de service sont renvoyées audit terminal (22) et pour le commander.

4. Station mobile (20) selon l'une quelconque des revendications 1 à 3, dans laquelle ledit adaptateur (21) comprend :
un moyen (55) de détection de demande d'appel pour détecter une demande d'appel d'un desdits terminaux (22) connectés audit adaptateur (21) ;
un moyen (52) d'émission de demande de service pour émettre une demande de service à ladite station mobile (20) si ladite demande d'appel est détectée ;
un moyen (57) de commande de numéro d'appel et d'adresse de terminal pour détecter l'entrée de données d'acceptation de service de ladite station mobile (20) et pour commander les numéros d'appel et adresses de terminal.

5. Station mobile (20) selon l'une quelconque des revendications 1 à 4, dans laquelle: ledit adaptateur (21) comprend un moyen (52) de notification pour notifier les données du terminal comprenant les types du terminal et le nombre de terminaux connectés audit adaptateur (21) à ladite station mobile (20).

6. Station mobile (20) selon l'une quelconque des revendications 1 à 5, dans laquelle: ledit adaptateur (21) notifie lesdites données du terminal à ladite station mobile (20) lorsque le courant est allumé, lorsqu'une demande de notification est émise à partir de ladite station mobile (20) ou lorsqu'un nouveau terminal (22) est connecté audit adaptateur (21).

7. Station mobile (20) selon l'une quelconque des revendications 1 à 6, dans laquelle des données sont transmises/reçues sur une base de division de temps pour chacun desdits terminaux (22) en effectuant des communications multi-appel à travers lesdits terminaux (22) connectés audit adaptateur (21).

8. Station mobile (20) selon l'une quelconque des revendications 1 à 7, dans laquelle : ledit adaptateur (21) peut traiter des interfaces de terminal telles qu'une interface infrarouge, une interface ISDN, une interface RS 232C et une interface de combiné et est pourvu d'au moins deux sortes desdites interfaces de terminal.

9. Station mobile (20) selon l'une quelconque des revendications 1 à 8, dans laquelle :
ledit moyen (83) de commande de données de terminal rassemble lesdites données de terminal à partir dudit adaptateur (21).

10. Adaptateur (21) fixé à une station mobile (20) qui réalise des communications via un appareil (26) de commande de station de base connecté à un réseau (27), **caractérisé en ce que** ledit adaptateur comprend :
une pluralité de connecteurs (816 à 820) connectés à une pluralité de terminaux (22) ;
un moyen (55) de détection de demande d'appel pour détecter une demande d'appel provenant desdits terminaux (22);
un moyen (52) d'émission de demande de service pour émettre une demande de service à ladite station mobile (20) lorsque ladite demande d'appel est détectée ;
un moyen (57) de commande de numéro d'appel et d'adresse de terminal pour détecter l'entrée de données d'acceptation de service provenant de ladite station mobile (20) et pour commander des numéros d'appel et des adresses de terminal.

11. Système de communication comprenant une station mobile (20) qui est connectée à une pluralité de terminaux (22) via un adaptateur (21) et qui réalise des communications via un appareil (26) de commande de station de base connecté à un réseau (27), **caractérisé en ce que** : dans lequel
ledit adaptateur (21) notifie des données de terminal qui indiquent les types de terminaux (22) à ladite station mobile (20) ;
ladite station mobile (20) commande les types de terminaux (22) qui peuvent correspondre aux demandes de service provenant dudit appareil (26) de commande de station de base et le nombre total d'appels multiples et renvoie un message d'acceptation de service audit appareil (26) de commande de station de base si les demandes de service en provenance de l'appareil (26) de commande de station de base peuvent être satisfaites
